# EUROPÄISCHE PATENTSCHRIFT

(11) **EP 1 483 764 B1**
(45) Veröffentlichungstag und Bekanntmachung des Hinweises auf die Patenterteilung: **03.12.2008**
(21) Anmeldenummer: 03704537.4
(22) Anmeldetag: 05.02.2003
(51) Int. Cl.: G21C 3/322

(54) **ABSTANDHALTER FÜR DAS BRENNELEMENT EINES SIEDEWASSERREAKTORS**
SPACER FOR THE FUEL ELEMENT OF A BOILING WATER REACTOR
DISPOSITIF D'ECARTEMENT DESTINE A L'ELEMENT COMBUSTIBLE D'UN REACTEUR A EAU BOUILLANTE

(30) Priorität: 14.03.2002 DE 10211179
(43) Veröffentlichungstag der Anmeldung: 08.12.2004
(73) Patentinhaber: AREVA NP GmbH, 91052 Erlangen (DE)
(72) Erfinder: LIEBLER-RANZUS, Michael, 91560 Heilsbronn (DE)
(74) Vertreter: Mörtel & Höfner
(86) Internationale Anmeldenummer: PCT/EP2003/001110
(87) Internationale Veröffentlichungsnummer: WO 2003/077261

(56) Entgegenhaltungen:
- EP-A- 0 378 384
- EP-A- 0 468 870
- DE-A- 4 100 667
- US-A- 4 999 153
- US-A- 5 265 140
- PATENT ABSTRACTS OF JAPAN vol. 018, no. 142 (P-1706), 9. März 1994 (1994-03-09) & JP 05 323073 A (NUCLEAR FUEL IND LTD), 7. Dezember 1993 (1993-12-07) in der Anmeldung erwähnt
- PATENT ABSTRACTS OF JAPAN vol. 014, no. 141 (P-1023), 16. März 1990 (1990-03-16) & JP 02 006788 A (MITSUBISHI ATOM POWER IND INC), 10. Januar 1990 (1990-01-10)

## Beschreibung

Die Erfindung betrifft ein Brennelement eines Siedewasserreaktors. Bei einem solchen Brennelement sind mehrere Brennstäbe in einem Brennelementkasten zu einem Brennstabbündel zusammengefasst. Über die Brennstablänge sind mehrere, zur Führung der Brennstäbe dienende Abstandhalter, welche von kreuzweise angeordneten Innenstegen und diese rahmenförmig umfassenden Außenstegen gebildete Zellen umfassen, angeordnet. Derartige Brennelemente sind beispielsweise aus JP 05 323073 A, EP-A-0 468 870 und US-A-4 999 153 bekannt. Beim Siedewasserreaktor strömt während des Reaktorbetriebs Wasser als Primärkühlmittel von unten in das Brennelement ein und durchströmt dieses nach oben. Die von den Brennstäben abgegebene Wärme erhitzt das Wasser, wodurch dieses teilweise verdampft. Im oberen Bereich des Brennelements liegt daher ein Zweiphasengemisch aus Wasser und Dampf vor. Beim Austritt aus dem Brennelement liegt der Dampfanteil üblicherweise bei etwa 60%.

Auf Grund der für den Siedewasserreaktor typischen Zweiphasenströmung bestehen besondere Anforderungen an die Ausgestaltung eines Brennelements. Neben der Beachtung einer geeigneten Neutronenmoderation ist dies insbesondere die Gewährleistung einer ausreichenden Kühlung der Brennstäbe beziehungsweise einer ausreichenden Wärmeabfuhr, von deren Oberfläche. Hierzu muss sichergestellt sein, dass die Oberfläche der Brennstäbe mit einer ausreichenden Menge Wasser benetzt ist. Dies ist nämlich Vorraussetzung für das sogenannte "Blasensieden", bei dem lokale Dampfblasen entstehen, die sich ausbreiten und schließlich zerplatzen. Der Wärmeübergang erfolgt dabei im wesentlichen durch eine ringförmige Zone unter der Blase. Auf Grund des hohen Dampfgehaltes im oberen Bereich des Brennelements besteht jedoch die Gefahr des sogenannten "Filmsiedens". Darunter wird der Effekt verstanden, dass ein sich auf der Brennstaboberfläche befindlicher Wasserfilm ohne Blasenbildung flächig abdampft, was schließlich dazu führt, dass der Brennstab in diesem Bereich nicht mehr mit Wasser benetzt ist. Durch die hierdurch bedingte geringere Kühlung steigt die Temperatur im Brennstab sprunghaft an und kann zur Beschädigung des Brennstabs führen.

Bekanntermaßen strömt an der Innenwand des Brennelementkastens ein Kühlmittelfilm entlang, dessen Dampfgehalt im oberen Bereich des Brennstabbündels zunimmt. Es ist bekannt, das Kühlpotential dieses Kühlmittelfilms zu nutzen, indem im Bereich eines Abstandhalters Kühlmittel radial nach innen in das Brennstabbündel hineingeleitet wird. Eine Maßnahme mit der dies erreicht werden kann ist in US 4,999,153 beschrieben. An der Innenwand des Brennelementkastens sind quer zur Strömungsrichtung des Kühlmittels verlaufende Nuten, sogenannte "Flowtripper" eingearbeitet. Diese dienen dazu, die Kühlmittelströmung an der Kasteninnenwand zu verwirbeln. Den Nuten in Strömungsrichtung nachgeschaltet sind aus der Außenseite der Außenstege vorstehende Ableitelemente, die den durch die Nuten aufgewirbelten Wasserfilm quasi von der Kasteninnenwand abschaben und über eine Durchströmöffnung in das Innere des Brennstabbündels umleiten. Ein ähnlicher Effekt wird bei einem aus JP 05323073 A bekannten Abstandhalter mit von Einströmöffnungen durchsetzten Außenstegen erreicht.

Der Erfindung liegt die Aufgabe zu Grunde, ein Brennelement eines Siedewasserreaktors mit einem Abstandhalter vorzuschlagen, mit dem an der Kasteninnenwand strömendes Kühlmittel auf alternative Weise zur Brennstabkühlung nutzbar gemacht werden kann.

Diese Aufgabe wird nach Anspruch 1 durch einen Abstandhalter mit einer Leiteinrichtung gelöst, welche eine an einem Außensteg angeordnete Durchströmöffnung und ein - in Strömungsrichtung des Kühlmittels gesehen - vor dieser angeordnetes, von der Innenseite des Außensteges abstehendes, einen von der Oberfläche eines Brennstabs und ihn umgebenden Innen- und Außenstegen gebildeten Strömungskanal verengendes Leitelement umfasst wobei eine Leiteinrichtung an einem Bereich des Außenstegs angeordnet ist, der sich zwischen einer nach innen vorspringenden, mit einem Brennstab zusammenwirkenden Klemmfeder und einem Innensteg erstreckt.

Bei einer derartigen Ausgestaltung wirkt das Leitelement mit der Durchströmöffnung nach Art einer Venturi-Düse zusammen. Bei einer Venturi- Düse mündet an einer verengten Stelle eines Strömungskanals ein mit der Umgebung verbundener Saugkanal. Auf Grund der an der Engstelle des Strömungskanals erhöhten Strömungsgeschwindigkeit ergibt sich dort ein Unterdruck, der sich über den Saugkanal nach außen fortpflanzt. Der Bereich zwischen der Oberfläche eines Brennstabes und den ihn umgebenden Innen- und Außenstegen bildet einen Strömungskanal. Dieser ist durch das nach innen vorstehende Leitelement verengt. Gegenüber dem an der Außenseite vorbeiströmenden Kühlmittel findet das an der Innenseite des Außenstegs strömende Kühlmittel eine Querschnittsverengung in Form des nach innen ragenden Leitelements vor, was zu der erwähnten Erhöhung der Geschwindigkeit bzw. der kinetischen Energie des Kühlmittels und zu einer entsprechenden Absenkung des Druckes führt. Das an der Kasteninnenwand entlangströmende Kühlmittel wird daher durch die Durchströmöffnung quasi hindurchgesaugt. Wenn vorzugsweise jeder Zelle mindestens eine solche Leiteinrichtung zugeordnet wird, lässt sich das Kühlpotential der Innenwandströmung zu einem merklichen Anteil ausnutzen. Der Abstand zur Siedeübergangsleitung wird auf diese Weise vergrößert und daher die Gefahr des Filmsiedens verringert. Bei Abstandhaltern der in Rede stehenden Art sind sowohl an den Innen- als auch an den Außenstegen mit den Brennstäben zusammenwirkende Klemmfedern vorhanden. Solche Klemmfedern sind in der Mitte des die Kantenlänge einer Zelle definierenden Außenstegbereiches angeordnet. Es ist daher zweckmäßig, die Leiteinrichtungen an dem sich von einer Klemmfeder bis zum jeweils nächsten Innensteg erstreckenden Bereich eines Außensteges anzuordnen.

Bei einer bevorzugten Ausführungsvariante ist das Leitelement eine an den Außenstegen angeformte Strömungsfahne, die mit der Planebene des Außenstegs einen sich in Strömungsrichtung öffnenden spitzen Winkel bildet. Eine solche Strömungsfahne lässt sich auf einfache Weise herstellen. Vorzugsweise ist sie durch sich etwa in Strömungsrichtung erstreckende und in den unteren Rand der Durchströmöffnung ausmündende Freischnitte gebildet. Wenn hier und im folgenden von unten und oben gesprochen ist, so bezieht sich dies auf den Einbauzustand eines Abstandhalters beziehungsweise eines Brennelements. Eine andere, insbesondere in fertigungstechnischer Sicht bevorzugte Ausgestaltung sieht vor, dass die Strömungsfahne von einem an den unteren Rand der Durchgangsöffnung angrenzenden tiefgezogenen Wandbereich des Außensteges gebildet ist.

Bei einer weiteren bevorzugten Ausführungsform ist jeder an einen Außensteg angrenzenden Zelle mindestens eine Leiteinrichtung zugeordnet, um den nach innen umgeleiteten Kühlmittelanteil zu erhöhen. Vorzugsweise weisen die Durchgangsöffnungen eine größere Breite auf als die Leitelemente. Es hat sich gezeigt, dass durch diese Ausgestaltung der Sogeffekt der Leitelemente besser ausnutzbar ist, das heißt, dass eine größere Kühlmittelmenge zum Brennstabbündel hin leitbar ist.

Vorzugsweise sind die Durchströmöffnungen in Form eines schräg zur Strömungsrichtung ausgerichteten Langloches ausgebildet. Durch diese Ausgestaltung kann dem die Durchströmöffnung durchsetzenden Kühlmittelstrom eine in bezug auf einen Brennstab radiale Strömungskomponente aufgezwungen werden. Bevorzugt sind zwei nebeneinander angeordnete Durchströmöffnungen, die unter Bildung eines sich gegen die Strömungsrichtung öffnenden spitzen Winkel gegensinnig schräg ausgerichtet sind. Insbesondere sind dabei die beiden Durchströmöffnungen benachbarten Zellen zugeordnet. Der Wirkungsgrad der Leiteinrichtung wird dadurch erhöht, dass der obere Rand der Durchströmöffnung und der sich in Strömungsrichtung daran anschließende Wandbereich des Außensteges konvex nach außen gewölbt sind.

Die Erfindung wird nun anhand von in den beigefügten Zeichnungen dargestellten Ausführungsbeispielen näher erläutert. Es zeigen:
- Fig.1: den Ausschnitt eines ersten Ausführungsbeispieles eines Abstandhalters in Seitenansicht,
- Fig.2: eine Draufsicht in Richtung des Pfeils II in Fig.1,
- Fig.3: einen Längsschnitt entsprechend der Linie III-III in Fig. 1 sowie einen vergrößerten Ausschnitt daraus, wobei Klemmfedern und Innensteg aus Gründen der Übersichtlichkeit weggelassen sind,
- Fig.4: ein weiteres Ausführungsbeispiel eines Abstandhalters in einer Fig.1 entsprechenden Darstellung,
- Fig.5: eine Draufsicht in Richtung des Pfeils V in Fig.4,
- Fig.6: einen Längsschnitt entsprechend der Linie VI-VI in Fig. 4, in einer Fig. 3 entsprechenden Darstellung,
- Fig.7: den Ausschnitt VII aus Fig.4 in vergrößerter perspektivischer Darstellung
- Fig.8: ein weiteres Ausführungsbeispiel eines Abstandhalters in einer Fig.1 entsprechenden Darstellung,
- Fig.9: eine Draufsicht in Richtung des Pfeils IX in Fig.8,
- Fig.10: einen Längsschnitt entsprechend der Linie X-X in Fig. 8, in einer Fig. 3 entsprechenden Darstellung

Der Abstandhalter 1 des Brennelements eines Siedewasserreaktors setzt sich aus kreuzweise ineinander gesteckten Innenstegen 2 und diese rahmenförmig umfassenden Außenstegen 3 zusammen. Innen- und Außenstege 3 umgrenzen Zellen 4, von denen im Montagezustand zumindest ein Teil jeweils von einem Brennstab 5 durchsetzt sind. Von der Innenseite 6 der Außenstege 3 stehen Klemmfedern 7 vor, welche die Brennstäbe 5 etwa in Radialrichtung beaufschlagen. In den Außenstegen 3 sind Schlitze 8 vorhanden. In diese erstrecken sich die Innenstege 2 mit aus ihren seitlichen Stirnkanten vorstehenden Fixierabschnitten 2a hinein und sind von der Außenseite des Außensteges 3 her mit diesem verschweißt. Am oberen Rand der Außenstege 3 sind Drallfahnen 9 und am unteren Rand Abweiserfahnen 10 angeordnet. Erstere dienen hauptsächlich dazu, das ein Brennelement von unten nach oben durchströmende Kühlmittel zu verwirbeln und an die Oberfläche der Brennstäbe zu leiten, letztere dienen als Einfädelhilfe beim Einführen eines Brennelementbündels in einen Brennelementkasten 21.

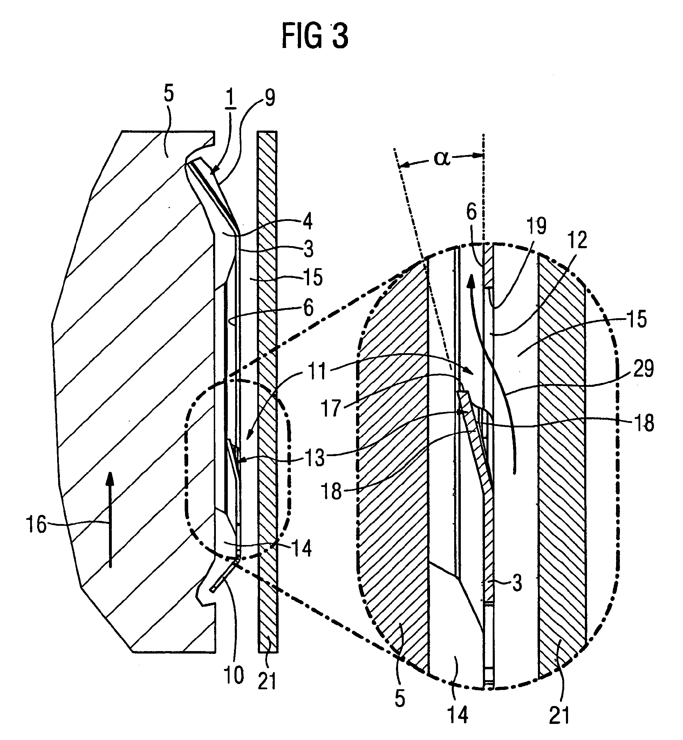

Im Bereich der Zweiphasenströmung eines Siedewasserbrennelements besteht die Gefahr, dass Teile der Oberfläche der Brennstäbe nicht ausreichend mit Wasser versorgt werden, so dass es dort zum sog. "Filmsieden" kommt. Dabei verdampft ein Kühlwasserfilm ohne lokale Bildung von Dampfblasen flächig ab. Die Folge ist eine fehlende oder mangelnde Abfuhr der von den Brennstäben erzeugten Wärme. Um diesem Effekt entgegenzuwirken sind an den Außenstegen 3 mehrere Leiteinrichtungen 11 vorhanden. Diese umfassen jeweils eine Durchströmöffnung 12 und ein dieser zugeordnetes Leitelement 3, welches von der Innenseite des Außensteges 3 absteht und mit der Durchströmöffnung nach Art einer Venturi-Düse zusammenwirkt. Das an der Innenseite 6 des Außensteges 3 angeordnete Leitelement 13 bewirkt eine Verengung des Strömungsquerschnittes des von der Oberfläche eines Brennstabes 5, einem Innensteg 2 und einem Außensteg 3 gebildeten Strömungskanals 14. Im Bereich der Verengung entsteht gegenüber dem außerhalb des Außensteges 3, nämlich in dem von und dem Brennelementkasten 21 und den Außenstegen 3 umgrenzten Strömungskanal 15 strömenden Kühlmittel ein Unterdruck. Über die Durchströmöffnung 12 wird daher Kühlmittel aus dem Strömungskanal 15 in den Strömungskanal 14 hinein gesaugt (siehe Pfeil 29 in Fig. 3). Das Kühlpotential dieses Kühlmittelanteils ist dann zur Kühlung der Brennstäbe 5 nutzbar.

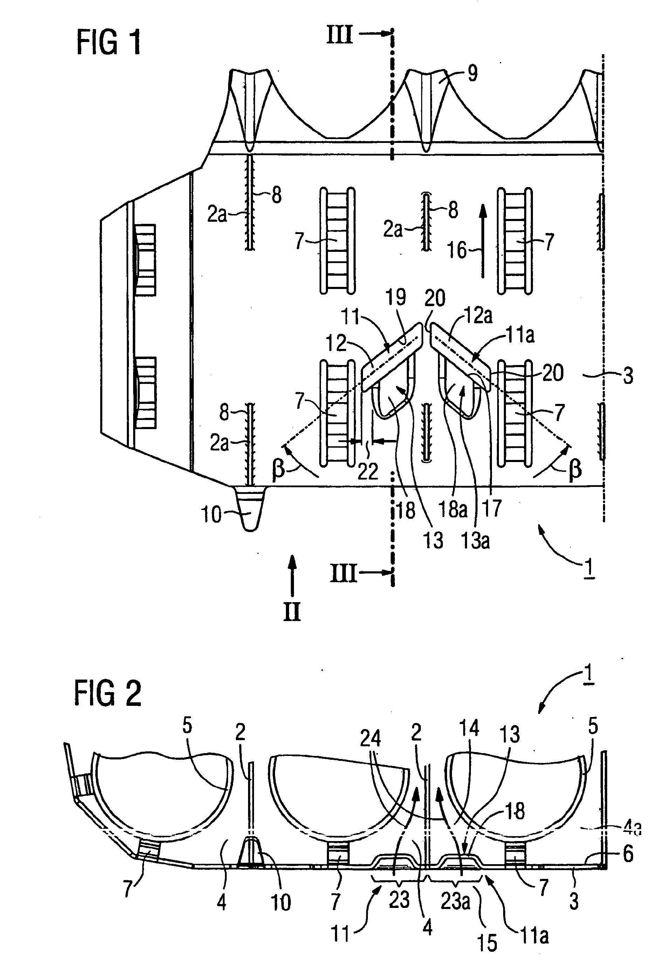

Die Leitelemente 13 sind an der Innenseite 6 der Außenstege 3 angeformte Strömungsfahnen, die mit der Planebene des Außensteges 3 einen sich in Längsrichtung eines Brennstabes beziehungsweise in Strömungsrichtung 16 öffnenden spitzen Winkel a (Fig. 3) einschließen. Bei den in Fig. 1 bis 7 dargestellten Ausführungsbeispielen ist das Leitelement 13, eine Strömungsfahne, die von einem an den unteren Rand 17 der Durchströmöffnung angrenzenden tiefgezogenen Wandbereich 18 des Außensteges 3 gebildet ist. Die Durchströmöffnungen 12 sind in Form von Langlöchern ausgebildet, wobei sich ihr unterer Rand 17 und ihr oberer Rand 19 etwa parallel zueinander erstrecken. Ihre Seitenränder 20 erstrecken sich etwa in Strömungsrichtung 16. Weiterhin sind die Durchströmöffnungen 12 breiter als die Leitelemente 13, so dass sie mit einem Überstand 22 letztere seitlich überragen.

Jeder an einen Außensteg 3 angrenzenden Zelle 4 ist eine Leiteinrichtung 11 zugeordnet, wobei diese jeweils in einem Bereich des Außensteges 3 positioniert ist, der sich zwischen einer Klemmfeder 7 und einem Innensteg 2 erstreckt. Vorzugsweise sind die Leiteinrichtungen 11, 11a zweier durch einen Innensteg 2 voneinander getrennter Zellen 4, 4a an den sich von dem Innensteg 2 beidseitig wegerstreckenden Bereichen 23, 23a positioniert. Die Durchströmöffnungen 12 können sich z.B. quer zur Strömungsrichtung 16 erstrecken. Bei den in den Zeichnungen dargestellten Ausführungsbeispielen sind sie jedoch schräg ausgerichtet. Die Schrägstellung zweiter benachbarten Zellen 4, 4a zugeordneter Durchströmöffnungen 12, 12a ist gegensinnig, wobei diese einen sich gegen die Strömungsrichtung 16 öffnenden spitzen Winkel β (Fig. 1) einschließen. Einem die Durchströmöffnungen 12, 12a durchsetzenden Kühlmittelstrom wird durch die Schrägstellung ein Drall etwa entsprechend den Strömungspfeilen 24 in Fig. 2 aufgezwungen. Das über die Durchströmöffnung 12, 12a eintretende Kühlmittel wird somit in Umfangsrichtung um die Brennstäbe 5 herum geleitet.

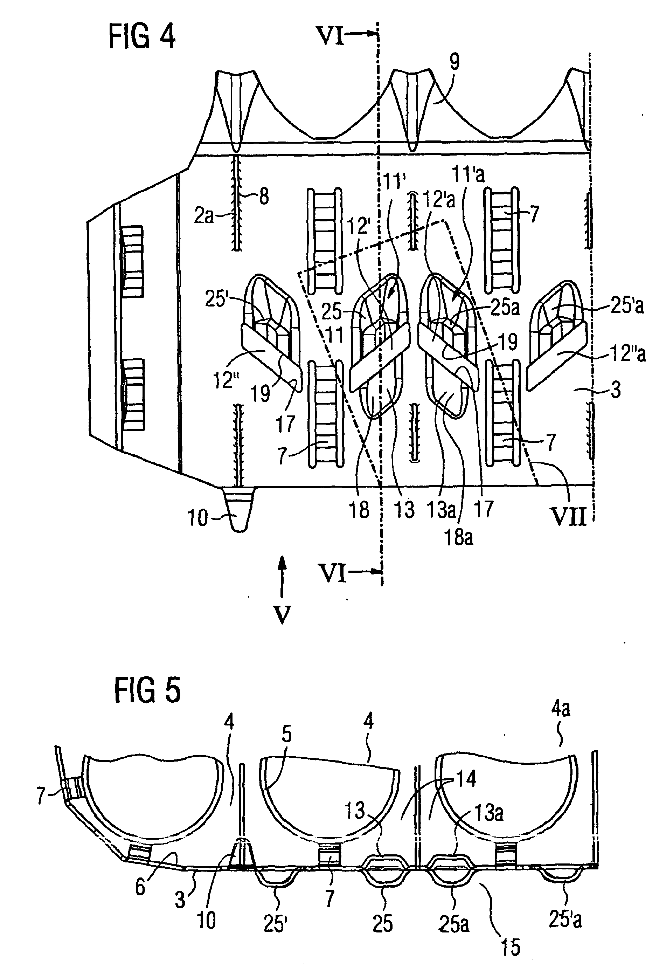

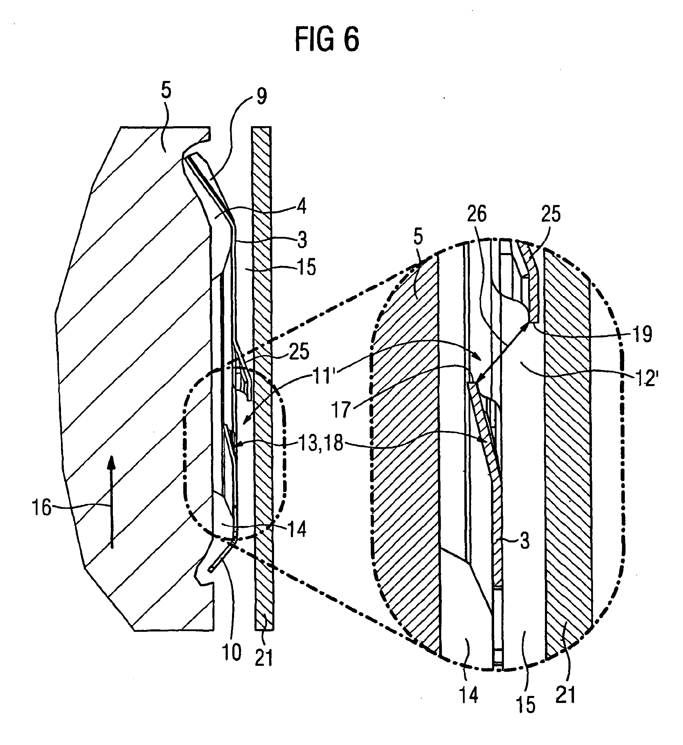

Bei dem in Fig. 4 bis 7 dargestellten Ausführungsbeispiel ist der obere Rand 19 der Durchströmöffnung 12', 12'a und der sich daran anschließende Wandbereich 25, 25a der Außenstege 3 konvex nach außen vorgewölbt. Die vorgewölbten, schaufel- oder löffelartig ausgebildeten Wandbereiche 25 stehen in den zwischen Außensteg 3 und Brennelementkasten 21 verlaufenden Strömungskanal 15 hinein und leiten Kühlmittel auf die Innenseite 6 der Außenstege 3 beziehungsweise in den Strömungskanal 14. Durch die genannte Ausgestaltung wird dem auf den weiter oben beschriebenen Venturi-Effekt zurückgehenden Kühlmittelanteil noch ein weiterer Kühlmittelanteil hinzugefügt. Durch die gegensinnige Vorwölbung des oberen Randes 19 und des unteren Randes 17 der Durchströmöffnungen 12' und 12'a wird der Durchlassquerschnitt 26 (Fig. 6) gegenüber Öffnungen, deren Ränder in der Planebene des Außenstegs 3 verlaufen vergrößert und damit das Einströmen von Kühlmittel erleichtert.

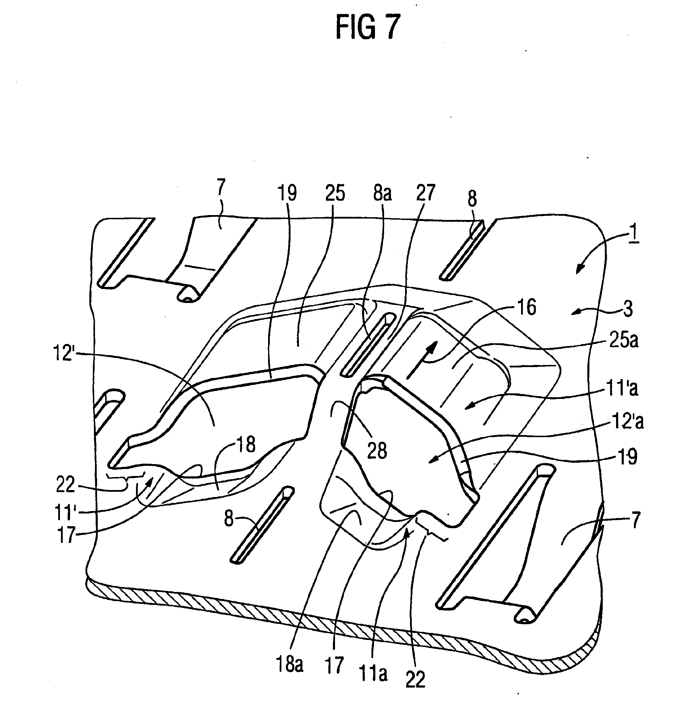

In Fig. 7 ist ein benachbarten Zellen 4, 4a zugeordnetes Paar von Leiteinrichtungen 11', 11'a gezeigt. Zwischen den Wandbereichen 25, 25a ist ein tieferliegender Wandabschnitt 27 angeordnet, der von einem in Strömungsrichtung 16 verlaufenden Schlitz 8a durchsetzt ist. An den Wandabschnitt 27 schließt sich ein weiterer, schräg verlaufender Wandabschnitt 28 an, der die beiden Durchströmöffnungen 12', 12'a voneinander trennt. Bei der in Rede stehenden Ausgestaltung ist die Seitenkante eines Innensteges 2 so ausgeformt, dass sie sich in die von den Wandabschnitten 27 und 28 gebildete Vorwölbung hineinerstreckt. Der Schlitz 8a ist, wie bei den Schlitzen 8 bereits beschrieben, von einem Fixierabschnitt 2a eines Innenstegs 2 durchgriffen. Durch die nach innen versetzte beziehungsweise vertiefte Anordnung des Wandabschnittes 27 kann der Fixierabschnitt 2a im Bereich des Schlitzes 8a von der Außenseite her mit Hilfe einer Schweißung fixiert werden ohne dass die Schweißnaht die Wandbereiche 25, 25a überragt.

Neben den beschriebenen Durchströmöffnungen 12 und 12' können auch Durchströmöffnungen 12" vorhanden sein, bei denen lediglich der obere Rand 19 und ein sich daran anschließender Wandbereich 25' nach außen vorgewölbt sind, wobei der untere Rand 17 in der Planebene des Außenstegs 3 verläuft, d.h. ein nach innen vorstehendes Leitelement 13 nicht vorhanden ist (siehe Fig. 4).

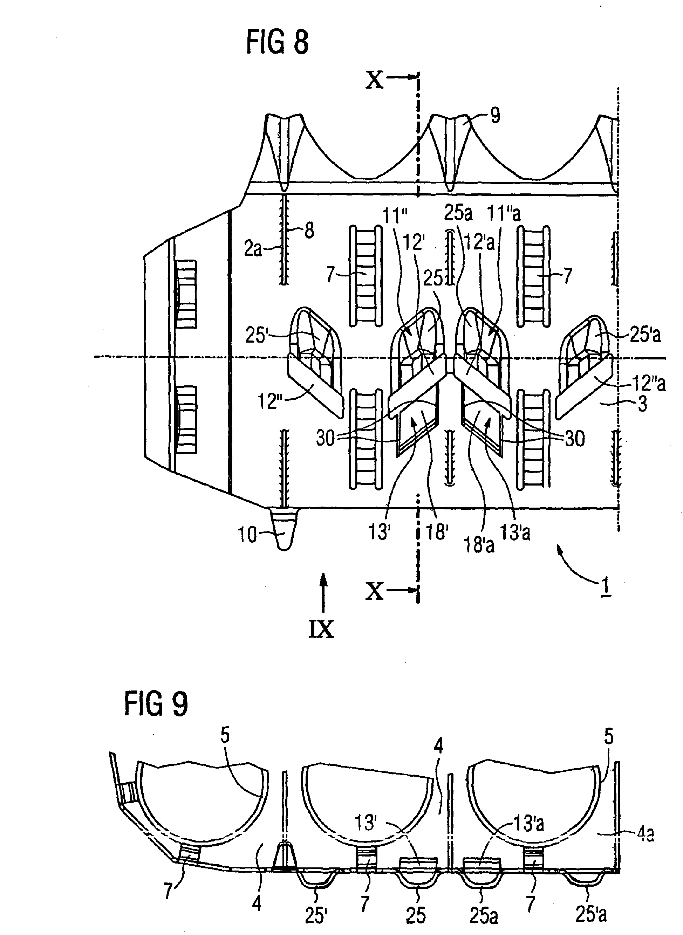

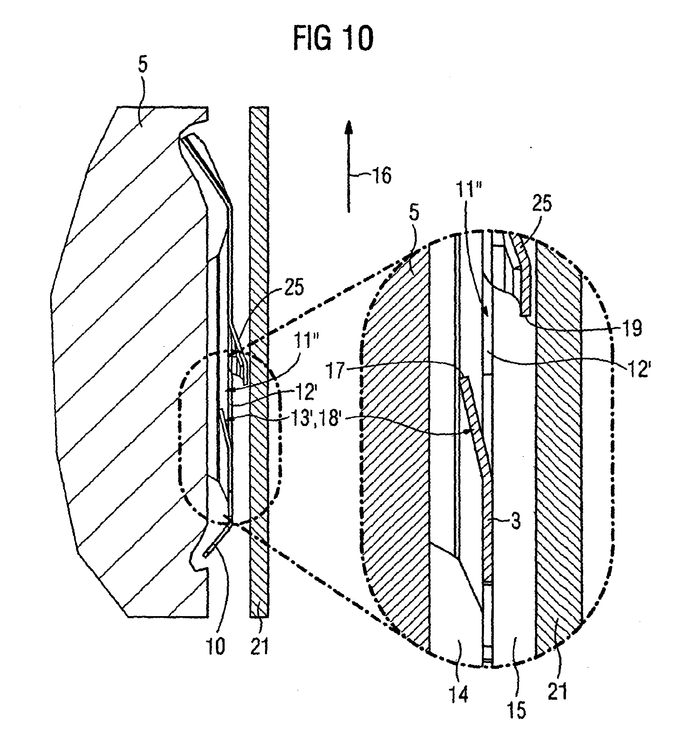

Bei dem in Fig. 8 bis 10 dargestellten Ausführungsbeispiel weist die Leiteinrichtung 11 " ein Leitelement 13' auf, das ebenfalls ein schräg nach innen vorstehender Wandbereich 18' ist. Dieser ist jedoch durch etwa in Strömungsrichtung 16 verlaufende und in den unteren Rand 17 der Durchströmöffnung 12' mündende Freischnitte 30 gebildet.

### Bezugszeichenliste

- 1: Abstandhalter
- 2: Innensteg
- 2a: Fixierabschnitt
- 3: Außensteg
- 4: Zelle
- 5: Brennstab
- 6: Innenseite
- 7: Klemmfeder
- 8: Schlitz
- 9: Drallfahne
- 10: Abweiserfahne
- 11: Leiteinrichtung
- 12: Durchströmöffnung
- 13: Leitelement
- 14: Strömungskanal
- 15: Strömungskanal
- 16: Strömungsrichtung
- 17: unterer Rand
- 18: Wandbereich
- 19: oberer Rand
- 20: Seitenrand
- 21: Brennelementkasten
- 22: Überstand
- 23: Bereich
- 24: Strömungspfeil
- 25: Wandbereich
- 26: Durchlassquerschnitt
- 27: Wandabschnitt
- 28: Wandabschnitt
- 29: Pfeil
- 30: Freischnitt
- α: Winkel
- β: Winkel

## Patentansprüche

1. Brennelement eines Siedewasserreaktors, umfassend mehrere Abstandhalter mit von kreuzweise angeordneten Innenstegen (2) und diese rahmenförmig umfassenden Außenstegen (3) gebildeten Zellen (4), wobei zumindest ein Teil der Zellen (4) von einem Brennstab durchsetzt ist,
**dadurch gekennzeichnet,**
**dass** der Abstandhalter wenigstens eine Leiteinrichtung (11) aufweist, die eine in einem Außensteg (3) angeordnete Durchströmöffnung (12) und ein - in Strömungsrichtung (16) des Kühlmittels gesehen - vor dieser angeordnetes, von der Innenseite (6) des Außensteges (3) nach innen abstehendes, einen von der Oberfläche eines Brennstabs (5) und ihn umgebenden Innen- und Außenstegen (2, 3) gebildeten Strömungskanal (14) verengendes Leitelement (13) umfasst, und dass eine Leiteinrichtung (11) an einem Bereich (23) des Außenstegs angeordnet ist, der sich zwischen einer nach innen vorspringenden, mit einem Brennstab (5) zusammenwirkenden Klemmfeder (7) und einem Innensteg (2) erstreckt.

2. Brennelement nach Anspruch 1,
**dadurch gekennzeichnet,**
**dass** das Leitelement (13) eine an den Außenstegen (3) angeformte Strömungsfahne ist, die mit der Planebene des Außenstegs (3) einen sich in Strömungsrichtung (16) öffnenden spitzen Winkel α bildet.

3. Brennelement nach Anspruch 2,
**dadurch gekennzeichnet,**
**dass** die Strömungsfahne ein durch zwei sich etwa in Strömungsrichtung (16) erstreckende und in den unteren Rand (17) der Durchströmöffnung (12) ausmündende Freischnitte (30) gebildeter Wandbereich 18' eines Außensteges (3) ist.

4. Brennelement nach Anspruch 2,
**dadurch gekennzeichnet,**
**dass** die Strömungsfahne von einem an den unteren Rand (17) der Durchströmöffnung (12) angrenzenden tiefgezogenen Wandbereich (18) des Außensteges (3) gebildet ist.

5. Brennelement nach einem der Ansprüche 1 bis 4,
**dadurch gekennzeichnet,**
**dass** jeder an einen Außensteg (3) angrenzenden Zelle(4) mindestens eine Leiteinrichtung (11) zugeordnet ist.

6. Brennelement nach einem der Ansprüche 1 bis 5,
**dadurch gekennzeichnet,**
**dass** die Durchströmöffnung (12) eine größere Breite aufweist als das Leitelement (13).

7. Brennelement nach einem der Ansprüche 1 bis 6,
**gekennzeichnet durch**
eine als Langloch ausgebildete und schräg zur Strömungsrichtung angeordnete Durchströmöffnung (12).

8. Brennelement nach Anspruch 7,
**dadurch gekennzeichnet,**
**dass** zwei nebeneinander angeordnete Durchströmöffnungen (12, 12a) gegensinnig schräg gestellt sind, wobei sie einen sich gegen die Strömungsrichtung (16) öffnenden spitzen Winkel β einschließen.

9. Brennelement nach Anspruch 8,
**dadurch gekennzeichnet,**
**dass** die beiden Durchströmöffnungen (12, 12a) benachbarten Zellen (4, 4a) zugeordnet sind.

10. Brennelement nach einem der Ansprüche 1 bis 9,
**gekennzeichnet durch**
eine Leiteinrichtung 11" , bei der der obere Rand (19) der Durchströmöffnung (12') und der sich in Strömungsrichtung daran anschließende Wandbereich (25) des Außensteges (3) konvex nach außen gewölbt sind.

## Claims

1. Fuel element of a boiling water reactor, comprising a number of spacers having cells (4) formed by inner webs (2) arranged in crosswise fashion and by outer webs (3) surrounding said inner webs in the form of a frame, at least one part of the cells (4) being penetrated by a fuel rod, **characterized in that** the spacer has at least one guide device (11) that comprises a flow opening (12), arranged in an outer web (3), and a guide element (13) which - seen in the flow direction (16) of the coolant - is arranged upstream of said flow opening, projects inward from the inner side (6) of the outer web (3), and constricts a flow channel (14) formed by the surface of a fuel rod (5), and inner and outer webs (2, 3) surrounding said fuel rod, and **in that** a guide device (11) is arranged at a region (23) of the outer web that extends between an inwardly projecting clamping spring (7) cooperating with a fuel rod (5) and an inner web (2).

2. Fuel element according to Claim 1, **characterized in that** the guide element (13) is a flow vane that is integrally formed on the outer webs (3) and forms an acute angle α, opening in the flow direction (16), with the flat plane of the outer web (3).

3. Fuel element according to Claim 2, **characterized in that** the flow vane is a wall region (18') of an outer web (3) that is formed by two cutouts (30) which extend approximately in the flow direction (16) and open out into the lower edge (17) of the flow opening (12).

4. Fuel element according to Claim 2, **characterized in that** the flow vane is formed by a deep-drawn wall region (18) of the outer web (3) that adjoins the lower edge (17) of the flow opening (12).

5. Fuel element according to one of Claims 1 to 4, **characterized in that** each cell (4) adjoining an outer web (3) is assigned at least one guide device (11).

6. Fuel element according to one of Claims 1 to 5, **characterized in that** the flow opening (12) has a greater width than the guide element (13).

7. Fuel element according to one of Claims 1 to 6, **characterized by** a flow opening (12) formed as an elongated hole and arranged obliquely to the flow direction.

8. Fuel element according to Claim 7, **characterized in that** two adjacently arranged flow openings (12, 12a) are positioned obliquely in opposite senses and enclose an acute angle β opening against the flow direction (16).

9. Fuel element according to Claim 8, **characterized in that** the two flow openings (12, 12a) are assigned to neighbouring cells (4, 4a).

10. Fuel element according to one of Claims 1 to 9, **characterized by** a guide device (11") in the case of which the upper edge (19) of the flow opening (12') and the wall region (25) of the outer web (3) subsequent thereto in the flow direction are cambered convexly outward.

## Revendications

1. Assemblage combustible d'un réacteur à eau bouillante, comprenant plusieurs dispositifs d'écartement avec des cellules (4) formées par des entretoises intérieures (2) disposées en croix et des entretoises extérieures (3) englobant celles-ci comme une armature, moyennant quoi au moins une partie des cellules (4) est traversée par un crayon combustible,
**caractérisé en ce que**
le dispositif d'écartement présente au moins un dispositif conducteur (11), qui comprend une ouverture d'écoulement (12) disposée dans une entretoise extérieure (3) et un élément conducteur (13) disposé avant celle-ci - vu dans la direction d'écoulement (16) du milieu de refroidissement - , dépassant vers l'intérieur à partir du côté interne (6) de l'entretoise extérieure (3), rétrécissant un canal d'écoulement (14) formé par la surface d'un crayon combustible (5) et les entretoises intérieures et extérieures (2,3) entourant celle-ci, et **en ce que** un dispositif conducteur (11) est disposé sur une région (23) de l'entretoise extérieure, qui s'étend entre un ressort de serrage (7) saillant vers l'intérieur, coopérant avec un crayon combustible (5) et une entretoise intérieure (2).

2. Assemblage combustible selon la revendication 1,
**caractérisé en ce que**
l'élément conducteur (13) est un talon d'écoulement ménagé sur les entretoises extérieures (3), lequel forme avec le plan de l'entretoise extérieure (3) un angle aigu α s'ouvrant dans la direction d'écoulement (16).

3. Assemblage combustible selon la revendication 2,
**caractérisé en ce que**
le talon d'écoulement est une portion de paroi 18' d'une entretoise extérieure formée par deux découpes libres (30) s'étendant approximativement dans la direction d'écoulement (16) et débouchant dans le bord inférieur (17) de l'ouverture d'écoulement (12).

4. Assemblage combustible selon la revendication 2,
**caractérisé en ce que**
le talon d'écoulement est formé par une portion de paroi (18) de l'entretoise extérieure (3) emboutie, contiguë au bord inférieur (17) de l'ouverture d'écoulement (12).

5. Assemblage combustible selon une des revendications 1 à 4,
**caractérisé en ce que**
au moins un dispositif conducteur (11) est coordonné à chaque cellule (4) contiguë à une entretoise extérieure (3).

6. Assemblage combustible selon une des revendications 1 à 5,
**caractérisé en ce que**
l'ouverture d'écoulement (12) présente une plus grande largeur que l'élément conducteur (13).

7. Assemblage combustible selon une des revendications 1 à 6,
**caractérisé par**
une ouverture d'écoulement (12) configurée comme un alésage oblong et disposée en biais par rapport à la direction d'écoulement.

8. Assemblage combustible selon la revendication 7,
**caractérisé en ce que**
deux ouvertures d'écoulement (12,12a) disposées côté à côté sont placés en biais en sens opposé, moyennant quoi elles définissent un angle aigu β s'ouvrant en sens opposé à la direction d'écoulement (16).

9. Assemblage combustible selon la revendication 8,
**caractérisé en ce que**
des cellules (4,4a) voisines sont coordonnées aux deux ouvertures d'écoulement (12,12a).

10. Elément de combustible selon une des revendications 1 à 9,
**caractérisé par**
un dispositif conducteur (11"), dans lequel le bord supérieur (19) de l'ouverture d'écoulement (12') et la portion de paroi (25) de l'entretoise extérieure (3) contiguë à celui-ci dans la direction d'écoulement sont incurvés de manière convexe vers l'extérieur.
